# EUROPÄISCHE PATENTSCHRIFT

(11) **EP 1 938 009 B1**
(45) Veröffentlichungstag und Bekanntmachung des Hinweises auf die Patenterteilung: **27.01.2010**
(21) Anmeldenummer: 06805423.8
(22) Anmeldetag: 12.10.2006
(51) Int. Cl.: F16K 31/06, B60H 1/22

(54) **BRENNSTOFFVENTIL ZUR VERSORGUNG EINES ZUSATZHEIZGERÄTES IN EINEM KRAFTFAHRZEUG MIT BRENNSTOFF**
FUEL VALVE FOR SUPPLYING FUEL TO AN AUXILIARY HEATING DEVICE IN A MOTOR VEHICLE
SOUPAPE A COMBUSTIBLE POUR ALIMENTER EN COMBUSTIBLE UN APPAREIL DE CHAUFFAGE AUXILIAIRE DANS UN VEHICULE AUTOMOBILE

(30) Priorität: 12.10.2005 DE 102005048713
(43) Veröffentlichungstag der Anmeldung: 02.07.2008
(73) Patentinhaber: Webasto AG, 82131 Stockdorf (DE)
(72) Erfinder: GALTZ, Gunter, 82064 Strasslach-Dingharting (DE); GRINER, Markus, 82131 Gauting (DE); NEUNER, Heiko, 96142 Hollfeld (DE)
(86) Internationale Anmeldenummer: PCT/DE2006/001808
(87) Internationale Veröffentlichungsnummer: WO 2007/042016

(56) Entgegenhaltungen:
- DE-A1- 3 811 670
- DE-A1- 10 241 449
- DE-U1- 9 410 219
- US-A1- 2005 218 362

## Beschreibung

Die Erfindung betrifft ein Brennstoffventil zur Versorgung eines Zusatzheizgerätes in einem Kraftfahrzeug mit Brennstoff, mit einer Magnetspule, einem Magnetanker und einer Feder, wobei die Feder durch Anlegen einer Anzugsspannung an die Magnetspule und die hierdurch erzeugte, eine Bewegung des Magnetankers veranlassende Magnetkraft komprimierbar ist und die Feder bei einer maximalen Restspannung, die an der Magnetspule anliegt, die Magnetkraft unter Expansion überwindet.

Derartige Brennstoffventile dienen insbesondere zur Versorgung von Standheizungen mit einem Zerstäubungsbrenner. Sie dienen dazu, zu jedem Zeitpunkt definierte Bedingungen im Brennstoffsystem zu erzielen, indem nämlich durch Bestromung einer Magnetspule das Ventil geöffnet und durch Abschalten des Spulenstroms das Ventil durch eine Federkraft wieder geschlossen wird.

Allerdings zeigen sich bei derartigen Brennstoffventilen Probleme im Hinblick auf eine zuverlässige Arbeitsweise. Da bei hohen Temperaturen der elektrische Widerstand der Magnetspulen erhöht ist, wird bei gegebener Spannung ein verminderter Spulenstrom fließen, was eine Herabsetzung der Magnetkraft zur Folge hat. Hierdurch kann es vorkommen, dass trotz angelegter Spannung an die Magnetspule die Federkraft, welche das Ventil geschlossen hält, nicht überwunden werden kann. Folglich kann das Ventil nicht öffnen. Andere Probleme beobachtet man auch im umgekehrten Fall, wenn das Ventil wieder geschlossen werden soll. Bei gängigen Systemen ist es nämlich üblich, dass an dem das Magnetventil ansteuernden Steuerausgang des Steuergerätes eine Restspannung von beispielsweise 0,4 V zur Verfügung steht, die typischerweise einen Stromverbrauch im Bereich von bis zu 5 mA bewirken kann. Folglich sinkt die Magnetkraft zur Veranlassung des Schließvorgangs des Ventils nicht auf Null ab, sondern sie bleibt auf einem dem genannten Spulenstrom entsprechenden Wert. Mitunter ist es daher möglich, dass die Federkraft nicht ausreichend ist, um diese Restmagnetkraft zu überwinden.

Dokument US-A-2005/0218362 offenbart ein Brennstoffventil gemäß den Oberbegriff des Anspruchs 1.

Der Erfindung liegt nie Aufgabe zugrunde, die geschilderten Probleme des Standes der Technik zu überwinden und insbesondere ein unter allen Umständen zuverlässig arbeitendes Brennstoffventil zur Verfügung zu stellen.

Diese Aufgabe wird mit den Merkmalen des unabhängigen Anspruches gelöst.

Vorteilhafte Ausführungsformen der Erfindung sind in den abhängigen Ansprüchen angegeben.

Die Erfindung baut auf dem gattungsgemäßen Brennstoffventil dadurch auf, dass eine Federkraft-Weg-Kennlinie so angepasst ist, dass sie für alle relevanten Wegwerte zwischen einer Magnetkraft-Weg-Kennlinie bei anliegender Anzugsspannung und einer Magnetkraft-Weg-Kennlinie bei anliegender maximaler Restspannung liegt. Hierdurch wird sichergestellt, dass das Brennstoffventil unter allen relevanten Umständen sicher geöffnet und sicher geschlossen werden kann.

In diesem Zusammenhang ist ebenfalls vorgesehen, dass die Federkraft-Weg-Kennlinie bei einer maximal zulässigen Temperatur zwischen einer Magnetkraft-Weg-Kennlinie bei anliegender Anzugsspannung und einer Magnetkraft-Weg-Kennlinie bei anliegender maximaler Restspannung liegt. Da die Probleme im Zusammenhang mit dem Öffnen des Brennstoffventils insbesondere bei hohen Temperaturen auftreten, hat die Anpassung der Federkraft-Weg-Kennlinie die maximal zulässigen auftretenden Temperaturen zu berücksichtigen.

Die Anpassung der Federkraft-Weg-Kennlinie kann auf verschiede Weisen erfolgen, von denen einige beispielhaft genannt werden sollen:

Es kann vorgesehen sein, dass die Anpassung der Federkraft-Weg-Kennlinie durch eine Feder mit verschiedenen Federkonstanten in verschiedenen Windungsbereichen realisiert ist.

Weiterhin kann vorgesehen sein, dass die Anpassung der Federkraft-Weg-Kennlinie durch eine Feder mit verschiedenen Windungssteigungen in verschiedenen Windungsbereichen realisiert ist.

Gemäß einer ebenfalls nützlichen Ausführungsform der vorliegenden Erfindung kann vorgesehen sein, dass die Anpassung der Federkraft-Weg-Kennlinie durch eine Feder mit verschiedenen Materialstärken in verschiedenen Windungsbereichen realisiert ist.

Weiterhin ist es möglich, dass die Anpassung der Federkraft-Weg-Kennlinie durch eine Feder mit verschiedenen Materialsteifigkeiten in verschiedenen Windungsbereichen realisiert ist.

Ferner kann vorgesehen sein, dass die Anpassung der Federkraft-Weg-Kennlinie durch eine Feder realisiert ist, die in verschiedenen Windungsbereichen aus verschiedenen Materialien besteht.

Es ist auch möglich, dass die Anpassung der Federkraft-Weg-Kennlinie durch mehrere Federn realisiert ist, die in unterschiedlichen Wegbereichen einzeln oder gemeinsam auf den Magnetanker wirken.

Der Erfindung liegt die Erkenntnis zugrunde, dass durch eine Anpassung der Federkraft-Weg-Kennlinie an die Magnetkraft-Weg-Kennlinien die Probleme im Hinblick auf das Öffnen und das Schließen eines Brennstoffventils bei allen auftretenden Temperaturen überwunden werden können. Die Erfindung wird vorliegend im Zusammenhang mit einem Brennstoffventil erläutert, dass "stromlos geschlossen" ist. Das Öffnen des Ventils erfolgt somit durch Bestromen der Magnetspule, während das Schließen des Ventils durch Abschalten beziehungsweise Verringern des Stromflusses erfolgt. Die Erfindung ist hierauf jedoch nicht beschränkt. Im Zusammenhang mit verschiedenen Anwendungen kommen Ventile zum Einsatz, die "stromlos geöffnet" sind. Auch in diesem Zusammenhang ist die Erfindung nützlich einsetzbar.

Die Erfindung wird nun mit Bezug auf die begleitenden Zeichnungen anhand bevorzugter Ausführungsformen beispielhaft erläutert.

Es zeigen:
- Figur 1: eine Schnittdarstellung eines Brennstoffventils, in dem die vorliegende Erfindung zum Einsatz kommt, und
- Figur 2: ein Kraft-Weg-Diagramm zur Erläuterung der vorliegenden Erfindung.

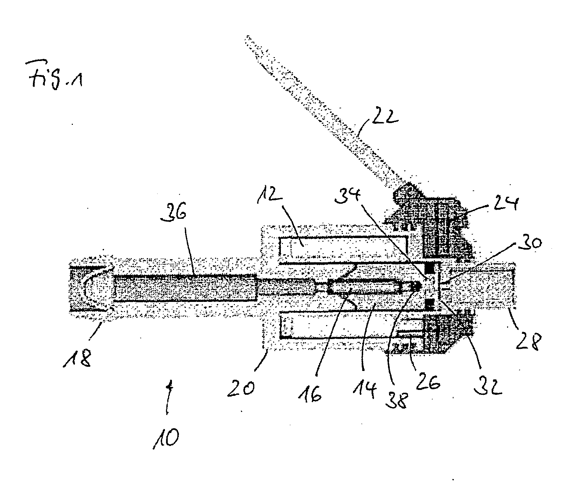

Figur 1 zeigt eine Schnittdarstellung eines Brennstoffventils, in dem die vorliegende Erfindung zum Einsatz kommt.

Das dargestellte Brennstoffventil 10 hat ein Gehäuse 20, in dem eine Magnetspule 12, eine Magnetanker 14 und eine Feder 16 angeordnet sind. An dem Gehäuse 20 ist weiterhin ein Brennstoffzuführstutzen 18 angeordnet. Über eine Spannungszuführung 22, 24, 26 ist der Magnetspule 12 eine Spannung zuführbar. Das Brennstoffventil 10 hat eine Brennstoffabführung 28, über die der Brennstoff an den Brennstoffverbraucher weitergeleitet werden kann. Die Brennstoffabführung 28 steht über eine dünne Brennstoffleitung 30 mit einem Ventilsitz 32 in Verbindung. Dieser Ventilsitz ist über eine mit dem Magnetanker 14 verbundene Elastomerdichtung 34 abdichtbar. Von dem Brennstoffzuführstutzen 18 gelangt Brennstoff über eine im Durchmesser abgestufte Brennstoffleitung 36, die im Bereich des Magnetankers 14 von der Feder 16 umgeben ist, zu einer Querbohrung 38, über die der zugeführte Brennstoff in den Bereich des durch die Elastomerdichtung 34 abgedichteten Ventilsitz 32 gelangen kann.

Das dargestellte Brennstoffventil arbeitet wie folgt. Im gezeigten Zustand drückt die Feder 16 den Magnetanker 14 mit der Elastomerdichtung 34 auf den Ventilsitz 32. Folglich ist das Brennstoffventil 10 geschlossen. Dieser Zustand wird eingenommen, wenn die Federkraft (F_{F}) die um die Druckkraft (F_{P}) des Brennstoffmassenstroms durch das Ventil und die aus der Ankerverschiebung im Ventil resultierende Reibungskraft (F_{R}) verminderte Magnetkraft (F_{magn}) übersteigt: F_{magn} = F_{F} + F_{P} + F_{R}. Insbesondere wird der geschlossene Zustand des Brennstoffventils im stromlosen Zustand der Magnetspule 12 eingenommen oder wenn nur geringe Ströme durch die Magnetspule 12 fließen. Zum Öffnen des Brennstoffventils 10 wird nun der Stromfluss durch die Magnetspule 12 erhöht, so dass die Magnetkraft F_{magn} steigt. Übersteigt die Magnetkraft F_{magn} die Gegenkräfte gemäß der obigen Kräftegleichung, so hebt die Elastomerdichtung 34 vom Ventilsitz 32 ab, und der aus der Querbohrung 38 austretende Brennstoff kann über die Leitung 30 zum Brennstoffauslass 28 gelangen. Soll das Brennstoffventil 10 wieder geschlossen werden, so wird der Strom durch die Magnetspule 12 herabgesetzt, beispielsweise auf Null oder einen geringen Wert. Folglich kann die Federkraft den Magnetanker mit der Elastomerdichtung 34 wieder auf den Ventilsitz 32 zum Zwecke der Abdichtung drücken.

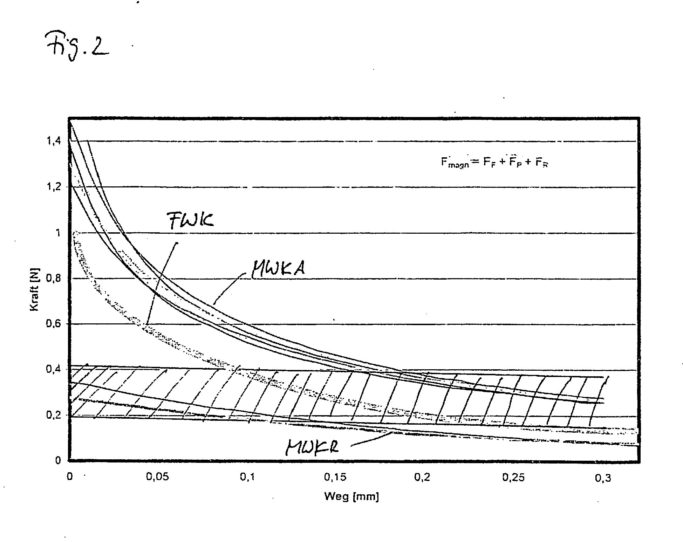

Figur 2 zeigt ein Kraft-Weg-Diagramm zur Erläuterung der vorliegenden Erfindung. Es sind verschiedene Kurven und Bereiche in einem Kraft-Weg-Diagramm dargestellt. Der schraffierte Bereich zeigt den Kraft-Weg-Verlauf einer herkömmlichen Feder, die in einem im Zusammenhang mit Figur 1 dargestellten Brennstoffventil 10 zum Einsatz kommt. Der Kraft-Weg-Verlauf ist linear, und er streut über einen durch die Schraffur gekennzeichneten Bereich. Die Kurven MWKA zeigen typische Verläufe der Magnetkraft-Weg-Kennlinie bei anliegender Anzugspannung. Die Kurven MWKR zeigen typische Magnetkraft-Weg-Kennlinien bei anliegender Restspannung, die auch im Falle des Wiederverschließens des Brennstoffventils an der Magnetspule anliegen kann. Die kritischen Bereiche dieses Diagramms liegen bei kleinen Wegwerten und, jenseits von einem unkritischen Bereich mittlerer Wegwerte, bei großen Wegwerten. Geht man beispielsweise davon aus, dass das Brennstoffventil bei einem Wegwert von 0,3 mm geschlossen ist, so erkennt man, dass der schraffierte Bereich, das heißt die möglichen auftretenden Kräfte einer herkömmlichen Feder, teilweise oberhalb der Kurven MWKA liegt. Dies bedeutet, dass die Magnetkraft nicht ausreichen würde, um den Magnetanker gegen die Federkraft zu bewegen. Betrachtet man weiterhin den Bereich bei einem Wegwert von Null, der dem vollständig geöffneten Zustand des Brennstoffventils entspricht, so sieht man auch hier, dass im Falle des Anliegens einer Restspannung entsprechend der Kurven MWKR ein Teil des der herkömmlichen Feder entsprechenden schraffierten Bereiches unterhalb der Kurven MWKR liegt. Folglich kann es vorkommen, dass die Federkraft nicht ausreicht, um die restliche Magnetkraft entsprechend den Kurven MWKR zu überwinden.

Auf der Grundlage der Erfindung werden die Probleme sowohl bei geschlossenem Brennstoffventil als auch bei geöffnetem Brennstoffventil überwunden. In einem erfindungsgemäßen Brennstoffventil verläuft die Federkraft-Weg-Kennlinie beispielsweise gemäß der Kurve FWK. Diese Kurve liegt bei allen Wegwerten zwischen den Kurven MWKA und MWKR, so dass insbesondere bei den Wegwerten für vollständig geschlossenes Brennstoffventil (0,3 mm) und vollständig offenes Magnetventil (0) die angesprochene Funktionsuntüchtigkeit nicht mehr auftreten kann.

### Bezugszeichenliste:

- 10: Brennstoffventil
- 12: Magnetspule
- 14: Magnetanker
- 16: Feder
- 18: Brennstoffzuführstutzen
- 20: Gehäuse
- 22: Spannungszuführung
- 24: Spannungszuführung
- 26: Spannungszuführung
- 28: Brennstoffabführung
- 30: Brennstoffleitung
- 32: Ventilsitz
- 34: Elastomerdichtung
- 38: Querbohrung

## Patentansprüche

1. Brennstoffventil (10) zur Versorgung eines Zusatzheizgerätes in einem Kraftfahrzeug mit Brennstoff, mit einer Magnetspule (12), einem Magnetanker (14) und einer Feder (16), wobei die Feder durch Anlegen einer Anzugsspannung an die Magnetspule und die hierdurch erzeugte, eine Bewegung des Magnetankers veranlassende Magnetkraft komprimierbar ist und die Feder bei einer maximalen Restspannung, die an der Magnetspule anliegt, die Magnetkraft unter Expansion überwindet, **dadurch gekennzeichnet, dass** eine Federkraft-Weg-Kennlinie (FWK) so angepasst ist, dass sie für alle relevanten Wegwerte zwischen einer Magnetkraft-Weg-Kennlinie bei anliegender Anzugsspannung (MWKA) und einer Magnetkraft-Weg-Kennlinie bei anliegender maximaler Restspannung (MWKR) liegt.

2. Brennstoffventil nach Anspruch 1, **dadurch gekennzeichnet, dass** die Federkraft-Weg-Kennlinie (FWK) bei einer maximal zulässigen Temperatur zwischen einer Magnetkraft-Weg-Kennlinie bei anliegender Anzugsspannung (MWKA) und einer Magnetkraft-Weg-Kennlinie bei anliegender maximaler Restspannung (MWKR) liegt.

3. Brennstoffventil nach Anspruch 1 oder 2, **dadurch gekennzeichnet, dass** die Anpassung der Federkraft-Weg-Kennlinie (FWK) durch eine Feder mit verschiedenen Federkonstanten in verschiedenen Windungsbereichen realisiert ist.

4. Brennstoffventil nach einem der vorhergehenden Ansprüche, **dadurch gekennzeichnet, dass** die Anpassung der Federkraft-Weg-Kennlinie (FWK) durch eine Feder mit verschiedenen Windungssteigungen in verschiedenen Windungsbereichen realisiert ist.

5. Brennstoffventil nach einem der vorhergehenden Ansprüche, **dadurch gekennzeichnet, dass** die Anpassung der Federkraft-Weg-Kennlinie (FWK) durch eine Feder mit verschiedenen Materialstärken in verschiedenen Windungsbereichen realisiert ist.

6. Brennstoffventil nach einem der vorhergehenden Ansprüche, **dadurch gekennzeichnet, dass** die Anpassung der Federkraft-Weg-Kennlinie (FWK) durch eine Feder mit verschiedenen Materialsteifigkeiten in verschiedenen Windungsbereichen realisiert ist.

7. Brennstoffventil nach einem der vorhergehenden Ansprüche, **dadurch gekennzeichnet, dass** die Anpassung der Federkraft-Weg-Kennlinie (FWK) durch eine Feder realisiert ist, die in verschiedenen Windungsbereichen aus verschiedenen Materialien besteht.

8. Brennstoffventil nach einem der vorhergehenden Ansprüche, **dadurch gekennzeichnet, dass** die Anpassung der Federkraft-Weg-Kennlinie (FWK) durch mehrere Federn realisiert ist, die in unterschiedlichen Wegbereichen einzeln oder gemeinsam auf den Magnetanker wirken.

## Claims

1. Fuel valve (10) for supplying an auxiliary heating unit in a motor vehicle with fuel, having a magnet coil (12), having a magnet armature (14) and having a spring (16), with it being possible for the spring to be compressed as a result of the application of a pull-in voltage to the magnet coil and the magnetic force which is generated as a result and which triggers a movement of the magnet armature, and with the spring overcoming the magnet force while expanding in the event of a maximum residual voltage being applied to the magnet coil, **characterized in that** a spring-force/travel characteristic curve (FWK) is adapted such that, for all relevant travel values, it lies between a magnet-force/travel characteristic curve for an applied pull-in voltage (MWKA) and a magnet-force/travel characteristic curve for an applied maximum residual voltage (MWKR).

2. Fuel valve according to Claim 1, **characterized in that**, at a maximum permissible temperature, the spring-force/travel characteristic curve (FWK) lies between a magnet-force/travel characteristic curve for an applied pull-in voltage (MWKA) and a magnet-force/travel characteristic curve for an applied maximum residual voltage (MWKR).

3. Fuel valve according to Claim 1 or 2, **characterized in that** the adaptation of the spring-force/travel characteristic curve (FWK) is realized by means of a spring with different spring constants in different winding regions.

4. Fuel valve according to one of the preceding claims, **characterized in that** the adaptation of the spring-force/travel characteristic curve (FWK) is realized by means of a spring with different winding gradients in different winding regions.

5. Fuel valve according to one of the preceding claims, **characterized in that** the adaptation of the spring-force/travel characteristic curve (FWK) is realized by means of a spring with different material thicknesses in different winding regions.

6. Fuel valve according to one of the preceding claims, **characterized in that** the adaptation of the spring-force/travel characteristic curve (FWK) is realized by means of a spring with different material stiffness values in different winding regions.

7. Fuel valve according to one of the preceding claims, **characterized in that** the adaptation of the spring-force/travel characteristic curve (FWK) is realized by means of a spring which is composed of different materials in different winding regions.

8. Fuel valve according to one of the preceding claims, **characterized in that** the adaptation of the spring-force/travel characteristic curve (FWK) is realized by means of a plurality of springs which act on the magnet armature individually or together in different travel regions.

## Revendications

1. Soupape (10) à carburant destinée à alimenter en carburant un appareil supplémentaire de chauffage d'un véhicule automobile et présentant une bobine magnétique (12), un induit magnétique (14) et un ressort (16), le ressort pouvant être comprimé par application d'une tension électrique de traction sur la bobine magnétique et sous l'action de la force magnétique ainsi produite qui lance un déplacement de l'induit magnétique, le ressort surmontant la force magnétique en s'allongeant lorsqu'une tension électrique maximale résiduelle est appliquée sur la bobine magnétique
**caractérisée en ce que**
une ligne caractéristique de force élastique-déplacement (FWK) est adaptée de telle sorte que pour toutes les valeurs de déplacement concernées, elle est située entre une ligne caractéristique de force magnétique-déplacement qui correspond à l'application d'une tension électrique de traction (MWKA) et une ligne caractéristique de force magnétique-déplacement qui correspond à l'application de la tension électrique résiduelle maximale (MWKR).

2. Soupape à carburant selon la revendication 1, **caractérisée en ce qu'**à une température maximale admissible, la ligne caractéristique de force élastique-déplacement (FWK) est située entre une ligne caractéristique de force magnétique-déplacement qui correspond à l'application d'une tension électrique de traction (MWKA) et une ligne caractéristique de force magnétique-déplacement qui correspond à l'application de la tension électrique résiduelle maximale (MWKR).

3. Soupape à carburant selon les revendications 1 ou 2, **caractérisée en ce que** l'adaptation de la ligne caractéristique de force élastique-déplacement (FWK) est réalisée par un ressort qui présente différentes constantes élastiques dans différentes parties de son enroulement.

4. Soupape à carburant selon l'une des revendications précédentes, **caractérisée en ce que** l'adaptation de la ligne caractéristique de force élastique-déplacement (FWK) est réalisée avec un ressort qui présente des enroulements de pas différents dans différentes parties de son enroulement.

5. Soupape à carburant selon l'une des revendications précédentes, **caractérisée en ce que** l'adaptation de la ligne caractéristique de force élastique-déplacement (FWK) est réalisée avec un ressort qui présente différentes épaisseurs dans différentes parties de son enroulement.

6. Soupape à carburant selon l'une des revendications précédentes, **caractérisée en ce que** l'adaptation de la ligne caractéristique de force élastique-déplacement (FWK) est réalisée avec un ressort dont le matériau présente différentes rigidités dans différentes parties de son enroulement.

7. Soupape à carburant selon l'une des revendications précédentes, **caractérisée en ce que** l'adaptation de la ligne caractéristique de force élastique-déplacement (FWK) est réalisée avec un ressort qui est constitué de différents matériaux dans différentes parties de son enroulement.

8. Soupape à carburant selon l'une des revendications précédentes, **caractérisée en ce que** l'adaptation de la ligne caractéristique de force élastique-déplacement (FWK) est réalisée avec plusieurs ressorts qui agissent séparément ou ensemble sur l'induit magnétique dans différentes parties de leur déplacement.
